Europäisches Patentamt

(19) European Patent Office

Office européen des brevets

(11) Numéro de publication : **0 295 184 B1**

(12) **FASCICULE DE BREVET EUROPEEN**

(45) Date de publication du fascicule du brevet :
**22.05.91 Bulletin 91/21**

(51) Int. Cl.⁵ : **B25B 33/00, B25J 15/06**

(21) Numéro de dépôt : **88401416.8**

(22) Date de dépôt : **10.06.88**

(54) **Outil à main à commande hydraulique.**

(30) Priorité : **10.06.87 FR 8708069**

(43) Date de publication de la demande :
**14.12.88 Bulletin 88/50**

(45) Mention de la délivrance du brevet :
**22.05.91 Bulletin 91/21**

(84) Etats contractants désignés :
**BE DE FR GB IT SE**

(56) Documents cités :
**AU-B- 445 662**
**DE-U- 8 410 474**
**FR-A- 2 563 291**
**GB-A- 2 112 874**
**GB-A- 2 116 102**
**US-A- 2 395 720**
**US-A- 3 339 263**
**US-A- 4 136 521**
**US-A- 4 263 801**
**US-A- 4 598 571**

(73) Titulaire : **SOCIETE D'ETUDE ET DE METHODE D'APPLICATIONS (S.E.M.A.), S.A.R.L.**
**1, rue des Grouêts Saint Ouen**
**F-41100 Vendôme (FR)**

(72) Inventeur : **Bussereau, Marcel**
**1, rue des Grouets Saint-Ouen**
**F-41100 Vendome (FR)**
Inventeur : **Courtois, Alain**
**51, rue de la Picardière**
**F-41000 Blois (FR)**
Inventeur : **Huet, Jean Pierre**
**38, rue de Villiersfins**
**F-41000 Blois (FR)**

(74) Mandataire : **Chambon, Gérard**
**Cabinet Chambon 6 et 8 avenue Salvador Allende**
**F-93804 Epinay-sur-Seine Cédex (FR)**

## Description

L'invention concerne les outils à main à commande hydraulique dans lesquels l'organe de travail, mobile par rapport au corps de l'outil, est sollicité vers ce dernier par un vérin dit "à tirer".

C'est le cas de divers outils connus tels, par exemple, qu'une poinçonneuse, qu'une sertisseuse à écrou noyé, qu'une riveteuse auto-cisaillante, qu'une cisaille pour câble, etc. Dans tous les cas, l'organe de travail (mâchoire mobile d'une cisaille, poinçon de découpe, mandrin à mors cisaillants d'une riveteuse, etc) comporte une queue rendue solidaire du piston d'un vérin hydraulique.

Très souvent, le vérin est alimenté à partir d'un réservoir de fluide, par une pompe aspirante et foulante reliée au vérin par une canalisation flexible et actionnée au pied. Cependant, afin de supprimer la gêne occasionnée par la liaison flexible pompe-vérin, gêne qui peut être rédhibitoire lorsqu'il s'agit de travailler sur un échafaudage ou une échelle, il a été proposé des outils du genre susdit avec réservoir de fluide et pompe incorporée, actionnée manuellement par un bras articulé autour d'un axe solidaire du corps du vérin, (voir par exemple US-A-4136521 et US-A-2395720).

L'invention propose pour de tels outils des perfectionnements destinés à en faciliter l'utilisation, à en réduire le coût de revient et à en accroître la sécurité.

Tout d'abord, dans le cas où l'organe de travail arrache de la matière au matériel à travailler, comme c'est le cas d'une riveteuse auto-cisaillante ou d'un poinçon emporte-pièce, il faut assurer l'évacuation des débris de matière. Dans tous les cas, il est souvent nécessaire d'agir, à l'aide d'un outil de serrage ou autre, sur un moyen de réglage ou d'immobilisation ou similaire, porté par l'organe de travail ou son moyen de solidarisation avec le piston du vérin. Afin de permettre cette évacuation des débris de matière et l'emprise directe d'un outil sur l'organe de travail, sans avoir à démonter ce dernier, l'invention prévoit une structure particulière.

Selon l'invention, l'outil à main comporte un organe de travail commandé par un vérin hydraulique à tirer, alimenté à partir d'un réservoir de fluide, par une pompe aspirante et foulante. Dans l'outil la pompe est solidaire du corps du vérin et est actionnée manuellement par un bras articulé autour d'un axe également solidaire dudit corps du vérin, tandis que le réservoir de fluide est porté par la pompe elle-même. Le corps de vérin est disposé coaxialement à l'extrémité d'un manche qui constitue l'une des branches, dite fixe, d'une poignée à deux branches dont la seconde branche, dite mobile, de la poignée, constitue la bras de manoeuvre de la pompe, et le corps de la pompe et le réservoir sont diposés latéralement sur la branche fixe de la poignée, tandis que cette dernière présente une structure tubulaire débouchée à ses deux extrémités. Le piston du vérin est muni d'une queue venant s'emboîter dans la partie avant de cette structure tubulaire et présente également, sur la totalité de sa longueur, une structure tubulaire débouchée, ainsi que la queue de l'organe de travail pour que soit constitué un canal ininterrompu s'étendant entre l'organe de travail et l'extrémité arrière ouverte de la branche fixe de la poignée de l'outil.

Au moins pour la branche dite fixe, on choisit une structure tubulaire ouverte à ses deux extrémités et l'on prend une structure semblable pour la queue de l'organe de travail de l'outil et pour le piston du vérin. On constitue ainsi un canal s'étendant sans interruption entre l'organe de travail et l'extrémité arrière ouverte de la branche fixe de la poignée. Ce canal constituera un canal d'éjection pour les débris éventuels de matière et un couloir de passage pour un outil devant agir sur l'organe de travail ou sur son moyen de solidarisation avec le piston du vérin.

Il faut remarquer que cette disposition des diverses parties de l'outil assure un bon équilibrage de l'ensemble de l'outil quel que soit l'angle d'ouverture des deux branches de la poignée.

Du point de vue économique, il est avantageux que différents outils (poinçonneuse, riveteuse,...) puissent être montés sur un même corps, même si ce montage est réservé au fabricant et non à l'utilisateur. Pour cela, il suffit que l'extrémité avant du piston du vérin émerge, au repos, du corps pour être coiffé par une cartouche venant se visser sur la partie avant du corps du vérin, chaque cartouche constituant le carter d'un moyen de solidarisation dudit piston avec la queue de l'organe de travail, moyen de solidarisation qui peut être un vissage réalisé en même temps que celui de la cartouche, ou encore le serrage des mors d'une mâchoire, ou autre.

Avantageusement, le réservoir de fluide est constitué en une matière élastiquement déformable afin d'être rétractable et expansible pour s'adapter automatiquement au volume du fluide en réserve, ce qui évite les rentrées d'air et permet donc un fonctionnement correct dans toutes les positions.

Bien entendu, comme dans le cas des outils à vérin poussant (demande EP-85902052.1, au nom de la même déposante), sur la canalisation de décharge de la chambre active du vérin vers le réservoir, est disposé un clapet à commande manuelle dont le retour sur son siège est assuré par un ressort taré pour constituer un clapet de sécurité. Cependant, si la course du piston du vérin n'est pas limitée par la butée de fin de course de l'organe de travail (fermeture totale d'une mâchoire ou d'une mandrin par exemple), ce qui peut se produire si quelqu'un manipule la poignée mobile sans qu'un outil soit monté, le piston du vérin sera sollicité avec force vers la cloison arrière du cylindre avec détérioration possible du ressort de rappel. C'est pourquoi il est avantageux de prévoir dans la chambre non active du cylindre du vérin, un épaulement interne destiné à constituer une butée pour la tête du piston. Ainsi, lorsque la tête du piston est appliquée contre cet épaulement, la manoeuvre de la branche mobile de la poignée entraîne une augmentation rapide et régulière de la pression dans la chambre active et, par conséquent, le déclenchement du clapet de sécurité.

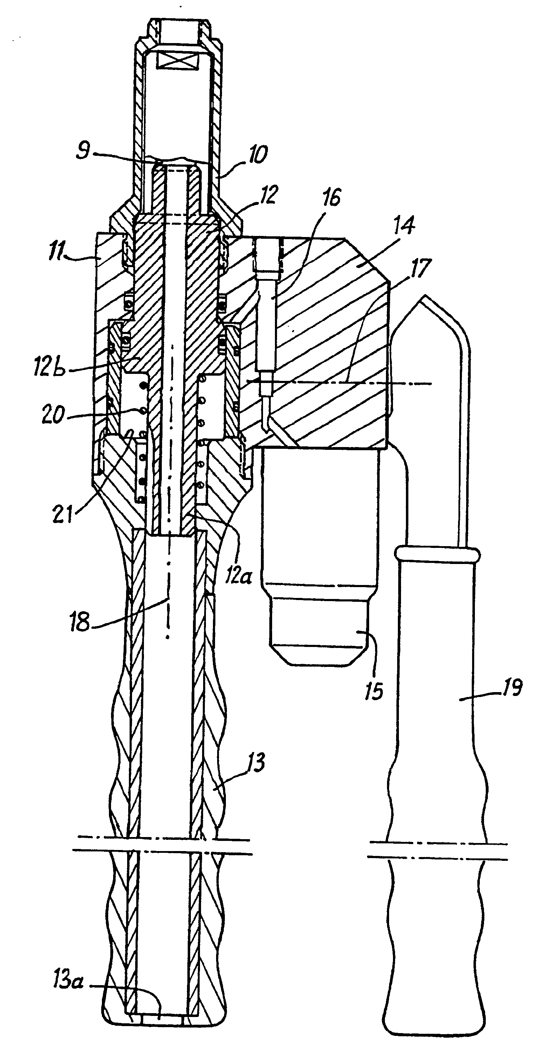

L'invention sera mieux comprise à la lecture de la description qui va suivre et qui se réfère au dessin annexé dans lequel la figure unique est une vue en élévation d'un outil selon l'invention, avec coupe longitudinale de la branche fixe de la poignée, du vérin, du bloc porte réservoir et coupe partielle de la cartouche porte organe de travail.

Sur le dessin, un outil à main comporte un organe de travail (non représenté) muni d'une queue 9, engagée dans une cartouche 10. La cartouche 10 est vissée sur l'extrémité avant du corps 11 d'un vérin hydraulique du type à tirer et forme le carter d'un moyen de solidarisation de ladite queue d'organe avec la tête du piston 12 du vérin qui, au repos, émerge du corps du vérin pour s'engager dans la cartouche 10.

Le corps 11 du vérin est disposé à l'avant d'un manche 13 et porte rigidement et latéralement un bloc 14 sur la face arrière duquel est fixé de façon amovible le réservoir 15 de fluide et dans lequel sont creusés le canal 16 d'alimentation de la chambre active du vérin, le canal de retour (non visible parce que situé dans un autre plan) du fluide vers le réservoir et le corps de la pompe d'alimentation du vérin dont l'axe longitudinal 17 est perpendiculaire à celui 18 dudit vérin.

La pompe est actionnée manuellement à l'aide d'un bras 19 articulé sur le bloc 14 et qui constitue la branche dite mobile d'une poignée de préhension à deux branches, pour l'outil considéré, l'autre branche, dite fixe, de la poignée étant constituée par le manche 13. L'outil peut ainsi être saisi et guidé fermement à deux mains, la disposition latérale, entre les deux branches, du bloc 14 avec le réservoir 15 assurant un excellent équilibrage de l'outil et de ce fait, une utilisation efficace et aisée.

Pour alléger l'outil dans son ensemble, il est bon de prévoir une structure tubulaire pour les deux branches de la poignée, mais, de toute façon, une telle structure, débouchée à ses deux extrémités, est adoptée pour le manche 13, ainsi que pour le piston 12 du vérin et, éventuellement la queue 9 de l'organe de travail. On constitue ainsi un canal ininterrompu s'étendant entre l'organe de travail et l'extrémité arrière ouverte du manche 13. Ce canal permet d'assurer l'évacuation des débris de matière lorsque l'organe de travail en produit (riveteuse auto-cisaillante par exemple) ou encore de permettre le passage d'un outil (par exemple outil de serrage) devant agir sur la queue de l'organe de travail.

De façon connue, le piston 12 du vérin se prolonge, à l'opposé de la chambre active, par une queue 12a qui traverse la paroi arrière dudit vérin et c'est cette queue qui est entourée par le ressort hélicoïdal 20 de rappel du piston vers sa position de repos lorsque la chambre active est mise en communication avec la canalisation de retour par l'actionnement manuel d'un clapet (non représenté). De façon également connue, le clapet de retour est sollicité vers son siège par un ressort taré de façon à constituer un clapet de sécurité, limitant à une valeur prédéterminée la pression admissible dans la chambre active du vérin.

Toutefois, si la pompe est manoeuvrée en l'absence d'un organe de travail, donc en l'absence de la butée de fin de course de cet organe, le piston du vérin risque de subir un déplacement de trop grande amplitude, amenant l'écrasement total du ressort 20 et sa détérioration, avant le déclenchement du clapet de sécurité. C'est pourquoi on prévoit dans la chambre du vérin opposée à la chambre active, un épaulement 21 sur lequel vient buter la partie 12b de plus grand diamètre du piston 12, la distance entre l'épaulement 21 et la paroi arrière du corps du vérin étant suffisante pour loger le ressort 20 comprimé. Après butée du piston contre l'épaulement, la pression dans la chambre active augmente rapidement si la pompe est actionnée et le clapet de sécurité se soulève à l'encontre de l'action du ressort taré.

Comme il a été dit ci-avant, le réservoir 15 de fluide est réalisé en une matière élastique (caoutchouc, élastomère ou autre) afin d'être rétractable et expansible et présenter un volume intérieur adapté, à chaque instant, à la quantité de fluide gardée en réserve. On évite ainsi les rentrées d'air et par conséquent, les risques de désamorçage de la pompe quelle que soit la position relative de l'outil.

## Revendications

1. Outil à main comportant un organe de travail commandé par un vérin hydraulique à tirer, alimenté à partir d'un réservoir (2) de fluide, par une pompe aspirante et foulante, dans lequel la pompe est solidaire du corps (11) du vérin et est actionnée manuellement par un bras (19) articulé autour d'un axe également solidaire dudit corps (11) du vérin, tandis que le réservoir de fluide (15) est porté par la pompe elle-même, caractérisé en ce que le corps de vérin (11) est disposé coaxialement à l'extrémité d'un manche (13) qui constitue l'une des branches, dite fixe, d'une poignée à deux branches dont la seconde branche (19), dite mobile, de la poignée, constitue le bras de manoeuvre de la pompe, en ce que le corps de la pompe et le réservoir (2) sont disposés latéralement sur la branche fixe (13) de la poignée, tandis que cette dernière présente une structure tubulaire débouchée à ses deux extrémités, et que le piston (12) du vérin est muni d'une queue (12a) venant s'emboîter dans la partie avant de cette structure tubulaire et présente également, sur la totalité de sa longueur, une structure tubulaire débouchée, ainsi que la queue de l'organe de travail pour que soit constitué un canal ininterrompu s'étendant entre l'organe de travail et l'extrémité arrière ouverte (13a) de la branche fixe (13) de la poignée de l'outil.

2. Outil à main selon la revendication 1, caractérisé en ce qu'au repos, l'extrémité avant du piston (12) du vérin émerge du corps (11) du vérin et est coiffée par une cartouche (10) qui vient se visser sur ledit corps (11) et qui constitue le carter d'un moyen de solidarisation dudit piston avec la queue (9) de l'organe de travail.

3. Outil à main selon l'une des revendications 1 et 2, caractérisé en ce que la tête du piston (12) du vérin comporte une partie médiane (12b) de plus grand diamètre dont la course vers l'arrière est limitée par un épaulement interne (21) de la chambre du vérin opposée à la chambre active.

4. Outil à main selon l'une des revendications 1 à 3, caractérisé en ce que le réservoir (15) de fluide est réalisé en une matière élastique de manière à être dilatable et rétractable afin de permettre l'utilisation efficiente de l'outil dans toutes les positions.

5. Outil à main selon l'une des revendications 1 à 4, caractérisé en ce qu'un bloc (14) dans lequel sont creusés le corps de la pompe, la canalisation (16) d'alimentation du vérin et la canalisation de retour au réservoir, est porté latéralement et rigidement par la branche fixe (13) de la poignée à hauteur du vérin.

## Ansprüche

1. Handwerkzeug mit einem Arbeitsorgan, das durch einen Zieh-Hydraulikzylinder betätigt wird, der aus einem Fluid-Reservoir durch eine Saug- und Druckpumpe gespeist wird, wobei die Pumpe mit dem Zylinderkörper (11) einstückig ist und durch einen Arm (19) handbetätigt wird, der um eine ebenfalls mit dem Zylinderkörper (11) einstückige Achse schwenkbar angebracht ist, während das Fluid-Reservoir (15) von der Pumpe selbst getragen wird, dadurch gekennzeichnet, daß der Zylinderkörper (11) koaxial am Ende eines Handgriffes (13) angeordnet ist, der den festen Arm eines zweiarmigen Handhabungsmittels bildet, dessen zweiter beweglicher Arm den Betätigungsarm der Pumpe bildet, wobei der Pumpenkörper und das Reservoir seitlich am festen Arm (13) des Handhabungsmittels angeordnet sind und dieser eine rohrförmige Ausbildung aufweist und an beiden Enden mit einer Öffnung versehen ist und der Kolben (12) des Zylinders mit einem Fortsatz (12a) versehen ist, der im vorderen Teil des rohrförmigen Arms eingesetzt ist und über seine gesamte Länge eine mit Öffnungen versehene rohrförmige Ausbildung aufweist wie auch der Endabschnitt des Arbeitsorganes, um einen ununterbrochenen Durchgang zu bilden, der sich zwischen dem Arbeitsorgan und dem hinteren offenen Ende (13a) des festen Armes (13) des Handhabungsmittels des Werkzeuges erstreckt.

2. Handwerkzeug nach Anspruch 1, dadurch gekennzeichnet, daß in der Ruhestellung das vordere Ende des Kolbens (12) des Zylinders aus dem Zylinderkörper (11) herausragt und durch eine Hülse (10) abgedeckt ist, die auf dem Körper (11) aufgeschraubt ist und das Gehäuse eines Mittels zum Zusammenhalten des Kolbens mit dem Endabschnitt (9) des Arbeitsorgans bildet.

3. Handwerkzeug nach einem der Ansprüche 1 und 2, dadurch gekennzeichnet, daß der Kopf des Kolbens (12) des Zylinders einen mittleren Abschnitt (12b) mit größerem Durchmesser aufweist, dessen rückwärtiger Hub durch eine innere Schulter (21) der Zylinderkammer begrenzt ist, die der Arbeitskammer gegenüberliegt.

4. Handwerkzeug nach einem der Ansprüche 1-3, dadurch gekennzeichnet, daß das Fluid-Reservoir (15) aus elastischem Material derart hergestellt ist, daß es sich ausdehnen und zusammenziehen kann, um eine effiziente Verwendung des Werkzeuges in allen Positionen zu erlauben.

5. Handwerkzeug nach einem der Ansprüche 1-4, dadurch gekennzeichnet, daß ein Block (14), in welchem der Pumpenkörper, die Zufuhrleitungen (16) zum Zylinder und die Rückführleitungen zum Reservoir eingearbeitet sind, seitlich und starr vom festen Arm (13) des Handhabungsmittels in der Höhe des Zylinders getragen wird.

## Claims

1. Hand tool comprising a working element operated by a pulling hydraulic jack fed from a fluid reservoir (2) by a suction and force pump, in which the pump is locked to the body (11) of the jack and is operated manually by an arm (19) articulated about a shaft also locked to said body (11) of the jack, while the fluid reservoir (15) is carried by the pump itself, characterised in that the jack body (11) is disposed co-axially at the end of a handle (13) which constitutes one fixed limb of a handle arrangement with two limbs the second moving limb (19) of which constitutes the arm for operating the pump, in that the body of the pump and the reservoir (2) are disposed laterally on the fixed limb (13) of the handle arrangement, while the latter exhibits a tubular structure unstopped at its two ends, and in that the piston (12) of the jack is provided with a shank (12a) which engages in the forward part of this tubular structure and over the entirety of its length also exhibits an unstopped tubular structure, and the shank of the working element so as to form an uninterrupted passage extending between the working element and the open rear end (13a) of the fixed limb (13) of the handle arrangement of the tool.

2. Hand tool as in claim 1, characterised in that at rest the forward end of the piston (12) of the jack emerges from the body (11) of the jack and is capped by a cartridge (10) which is screwed onto said body (11) and which constitutes the casing of a means of locking said piston to the shank (9) of the working element.

3. Hand tool as in one of claims 1 and 2, characterised in that the head of the piston (12) of the jack comprises a middle part (12b) of greater diameter the rearward movement of which is limited by an internal shoulder (21) in the opposite chamber of the jack to the active chamber.

4. Hand tool as in one of claims 1 to 3, characterised in that the fluid reservoir (15) is made of an elastic material capable of expansion and retraction so as to permit the efficient use of the tool in every position.

5. Hand tool as in one of claims 1 to 4, characterised in that a block (14) in which the body of the pump, the jack feed passage (16) and the return passage to the reservoir are formed is carried laterally and rigidly by the fixed limb (13) of the handle arrangement level with the jack.